# EUROPEAN PATENT APPLICATION

(11) **EP 4 637 217 A1**
(43) Date of publication of application: **22.10.2025**
(21) Application number: 24170201.8
(22) Date of filing: 15.04.2024
(51) Int. Cl.: H04W 48/20

(54) **MOBILE TERMINAL AND METHOD FOR CONNECTING TO A COMMUNICATION NETWORK**

(71) Applicant: NTT DOCOMO, INC., Tokyo 100-6150 (JP)
(72) Inventor: KATSALIS, Kostas, 80687 Munich (DE); TANAKA, Itsuma, 80687 Munich (DE); SAMA, Malla Reddy, 80687 Munich (DE); TRIAY MARQUES, Joan, 80687 Munich (DE); ONODA, Takanobu, Tokyo 100-6150 (JP)
(74) Representative: Viering, Jentschura & Partner mbB Patent- und Rechtsanwälte

(57) **Abstract**

According to one embodiment, a mobile terminal is described comprising a receiver configured to receive one or more messages comprising propagation environment element information specifying, for at least one base station of a plurality of base stations of a radio access network, one or more propagation environment elements which are allowed to be used for communication between the mobile terminal and the selected base station, a controller configured to select one of the base stations depending on the propagation environment element information and a transmitter configured to transmit a connection request to the selected base station.

## Description

The present disclosure relates to mobile terminals and methods for connecting to a communication network.

A communication system may include propagation environment elements which can interact with one or more of the communication system's radio access networks (RANs) and can direct the propagation of radio waves to mobile terminals. For example, towards 6G, programmable metasurfaces are expected to play a key role for extending the RAN capabilities close to mobile terminals. Accordingly, efficient mechanisms to make use of the capabilities of propagation environment elements are desirable.

According to one embodiment, a mobile terminal is provided comprising a receiver configured to receive one or more messages comprising propagation environment element information specifying, for at least one base station of a plurality of base stations of a radio access network, one or more propagation environment elements which are allowed to be used for communication between the mobile terminal and the selected base station, a controller configured to select one of the base stations depending on the propagation environment element information and a transmitter configured to transmit a connection request to the selected base station.

According to another embodiment, a method for connecting to a communication network according to the mobile terminal described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a mobile radio communication system according to an embodiment.
Figure 2 illustrates a propagation environment in which two RANs (radio access networks) exchange radio waves with a UE (user equipment).
Figure 3 illustrates a data flow path between a disaggregated RAN and a UE in case of propagation via a PMU (Programmable Metasurface Unit).
Figure 4 illustrates a data flow path between a disaggregated RAN and a UE in case of propagation via an NCR (Network-Controlled Repeater).
Figure 5 illustrates a cell selection according to an embodiment.
Figure 6 shows the message flow between a UE, a gNB and an AMF according to 3GPP for UE triggered transition from RRC_IDLE to RRC_CONNECTED.
Figure 7 shows a mobile terminal according to an embodiment.
Figure 8 shows a flow diagram 800 illustrating a method for connecting to a communication network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below: Example 1 is a mobile terminal, comprising a receiver configured to receive one or more messages comprising propagation environment element information specifying, for at least one base station of a plurality of base stations of a radio access network, one or more propagation environment elements which are allowed to be used for communication between the mobile terminal and the selected base station, a controller configured to select one of the base stations depending on the propagation environment element information and a transmitter configured to transmit a connection request to the selected base station.

Example 2 is the mobile terminal of example 1, wherein the controller is configured to select one or more propagation environment elements of a set of propagation environment elements which are allowed to be used for communication between the mobile terminal and the selected base station and the transmitter is configured to include into the connection request an indication of the selected one or more propagation environment elements.

Example 3 is the mobile terminal of example 1, wherein the receiver is configured to receive a response to the connection request indicating one or more of the propagation environment elements which are to be used for communication between the mobile terminal and the selected base station and the mobile terminal is configured to use the one or more indicated propagation environment elements for communication with the selected base station.

Example 4 is the mobile terminal of example 3, wherein the response is a radio resource control setup message or a radio resource control resume message.

Example 5 is the mobile terminal of example 1, wherein the receiver is configured to receive a radio resource control reconfiguration message indicating one or more of the propagation environment elements which are to be used for communication between the mobile terminal and the selected base station and the mobile terminal is configured to use the one or more indicated propagation environment elements for communication with the selected base station.

Example 6 is the mobile terminal of any one of examples 1 to 4, wherein the connection request is a radio resource control setup request message or a radio resource control resume request message.

Example 7 is the mobile terminal of any one of examples 1 to 6, wherein the receiver is configured to receive, from each base station of the plurality of base stations, a respective message comprising respective propagation environment element information specifying one or more propagation environment elements which can be used for communication between the mobile terminal and the selected base station or specifying that there is no propagation environment element which can be used for communication between the mobile terminal and the selected base station.

Example 8 is the mobile terminal of any one of examples 1 to 7, wherein the one or more messages indicate a location, a type, an identification, dimensions and/or capabilities and/or configuration of the one or more propagation environment elements which are allowed to be used for communication between the mobile terminal and the selected base station.

Example 9 is the mobile terminal of any one of examples 1 to 8, wherein the connection request is a radio resource control request.

Example 10 is the mobile terminal of any one of examples 1 to 9, wherein the one or more messages are system information blocks.

Example 11 is the mobile terminal of any one of examples 1 to 10, wherein the one or more messages are dedicated system information blocks for providing propagation environment element to mobile terminals.

Example 12 is the radio communication component according to any one of examples 1 to 11, wherein the one or more propagation environment elements include one or more network-controlled repeaters and/or one or more passive and/or active programmable metasurface units.

Example 13 is a communication system comprising the mobile terminal of any one of example 1 to 12 and further comprising the plurality of base stations, wherein the at least one base station comprises a transmitter configured to transmit one of the one or more messages which comprises the propagation environment element information.

Example 14 is the communication system of example 13, wherein each of the plurality of base stations is configured to transmit a respective one of the one or more messages comprising respective propagation environment element information specifying one or more propagation environment elements which are allowed to be used for communication between the mobile terminal and the selected base station or specifying that there is no propagation environment element which is allowed to be used for communication between the mobile terminal and the selected base station.

Example 15 is a method for connecting to a communication network, comprising receiving one or more messages comprising propagation environment element information specifying, for at least one base station of a plurality of base stations of a radio access network, one or more propagation environment elements which are allowed to be used for communication between the mobile terminal and the selected base station, selecting one of the base stations depending on the propagation environment element information and transmitting a connection request to the selected base station.

It should be noted that one or more of the features of any of the examples above may be combined with any one of the other examples. In particular, the examples described in context of the device are analogously valid for the method.

According to further embodiments, a computer program and a computer readable medium comprising instructions, which, when executed by a computer, make the computer perform the method of any one of the above examples are provided.

In the following, various examples will be described in more detail.

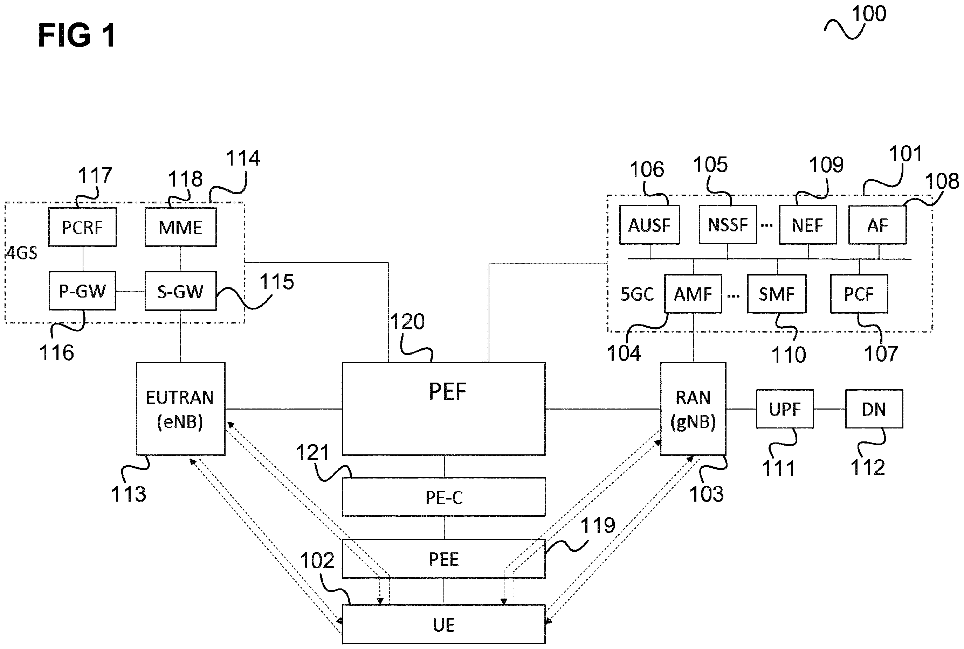

Figure 1 shows a mobile radio communication system 100. In this example, the mobile radio communication system 100 includes a 4G part and a 5G part, but it may comprise either one.

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

In the 5G part, the mobile radio communication system 100 includes a 5G Radio Access Network (RAN) 103, which may include a plurality of radio access network nodes, i.e. 5G base stations (gNBs) configured to provide radio access in accordance with a 5G (Fifth Generation) radio access technology (5G New Radio). Each 5G radio access network node may provide a radio communication with the mobile radio terminal device 102 over an air interface. It should be noted that the 5G radio access network 103 may include any number of radio access network nodes.

Further, in the 5G part, the mobile radio communication system 100 includes a 5G core network (5GC) 101 including an Access and Mobility Management Function (AMF) 104 connected to the 5G RAN 103 and a Network Slice Selection Function (NSSF) 105. Typically, there is also a Unified Data Management (UDM, not shown in figure 1) which may further consist of the actual UE's subscription database, which is known as, for example, the UDR (Unified Data Repository). The 5G core network further includes an AUSF (Authentication Server Function) 106, a PCF (Policy Control Function) 107, an AF (application function) 108, a Network Exposure Function (NEF) 109 and a Session Management Function (SMF) 110.

Further, the 5G RAN 103 is connected to a data network (DN) 112 via a User Plane Function (UPF) 111. The SMF 110 is for handling PDU (Protocol Data Unit) sessions, i.e. for creating, updating and removing PDU sessions and managing session context with the User Plane Function (UPF) 111.

In the 4G part, the communication system 100 includes a 4G Radio Access Network 113, i.e. an E-UTRAN, which may include a plurality of radio access network nodes, i.e. 4G base stations (eNBs) configured to provide radio access in accordance with a 4G (Fourth Generation) radio access technology, i.e. LTE (Long Term Evolution). Again, it should be noted that each 4G radio access network node may provide a radio communication with the mobile radio terminal device 102 over an air interface and that the 4G radio access network 103 may include any number of 4G radio access network nodes.

Further, in the 4G part, the mobile radio communication system 100 includes a 4G system (4GS) 114 which includes a Serving Gateway (S-GW) 115, a PDN (Packet Data Network) Gateway (P-GW) 116, a Policy und Charging Rules Function (PCRF) 117 and a Mobility Management Entity (MME) 118.

The 5G RAN 103 and the 5G core network 101 and/or the 4G RAN 113 and the 4G system 114 form the network side of the mobile radio communication system, or, in other words, form the 5G and/or 4G mobile radio communication network(s). The mobile radio communication network(s) and the mobile terminals accessing the mobile radio communication network(s) form, together, the mobile radio communication system.

The communication between the RANs 103, 113 and the UE 102, i.e. the air interface, is facilitated by the transmission of radio waves in a propagation environment (PE). The propagation environment comprises various PE elements (PEEs) 119, i.e. various objects which affect the propagation of radio waves. These may be cars and buildings etc. but also controllable and/or active PE elements which are deliberately placed to affect the propagation of radio waves, in particular Programmable Metasurface Units (PMUs) and Network-Controlled Repeaters (NCR).

According to various embodiments, the communication system 100 further comprises a Propagation Environment Function (PEF) 120 which is able to interact with both the 5G core network 101 and the 5G RAN 103 like also with both the 4G system 114 and the 4G RAN 113. Each PEE 119 is connected to the PEF 120 by a Propagation Environment Control and Management component (PE-C) 121.

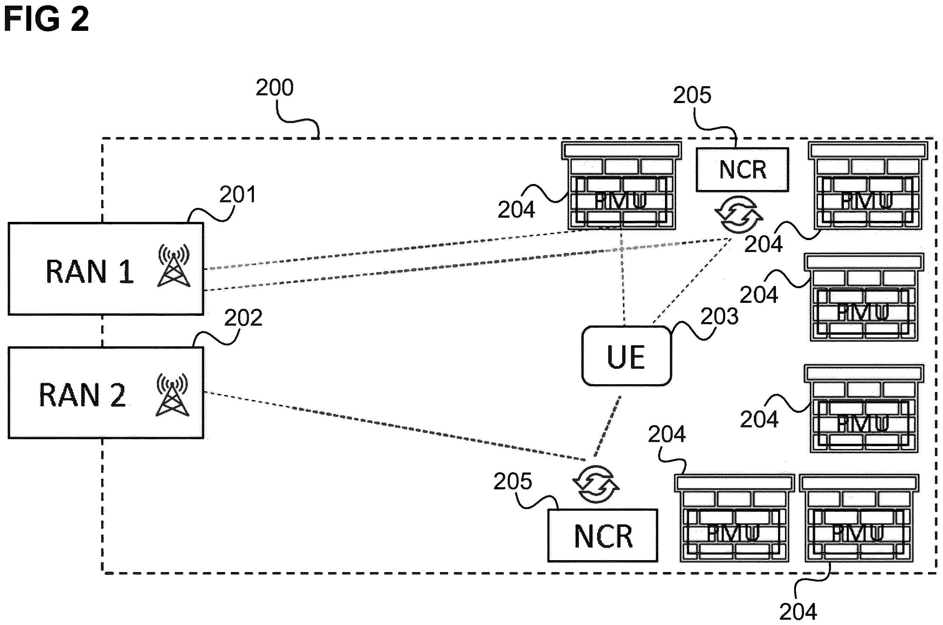

Figure 2 illustrates a propagation environment 200 in which two RANs 201, 202 (e.g. a first base station 201 and a second base station 202) exchange radio waves with a UE 203 which comprises multiple PMUs 204 and multiple NCRs 205. The radio signal transmission between a RAN and a UE may include multiple hops, i.e. the radio signal may be propagated via multiple PEEs.

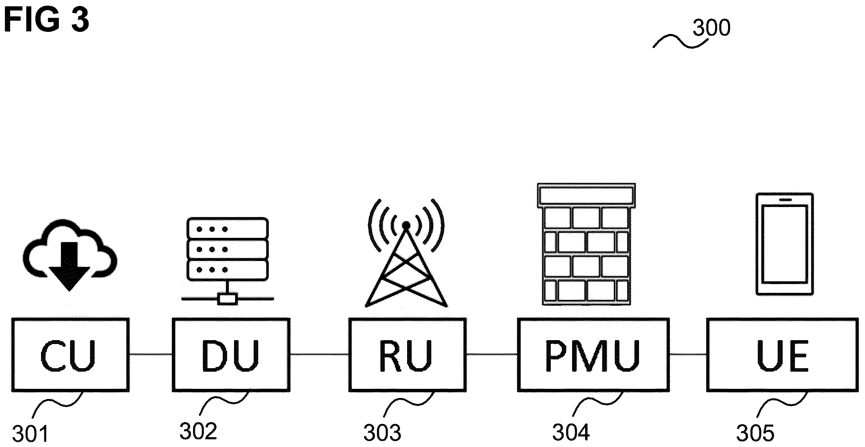

Figure 3 illustrates the data flow path between the disaggregated RAN (here in detail a centralized unit 301, distributed unit 302 and radio unit 303) and UE 305 in case of propagation via a PMU 304 in the PE.

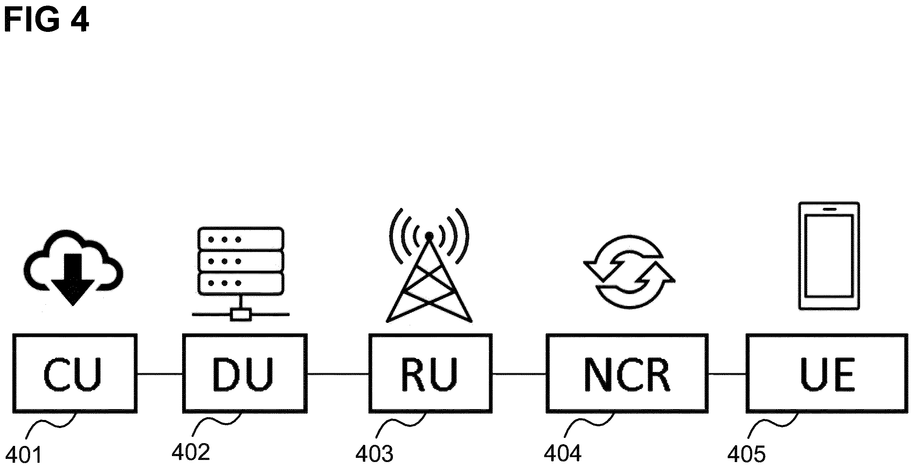

Figure 4 illustrates the data flow path between the disaggregated RAN (here in detail a centralized unit 401, a distributed unit 402 and a radio unit 403) and UE 405 in case of propagation via an NCR 404 in the PE.

Since radio communication between a UE 102 and a RAN 113, 1103 may be more efficient using a PEE 119, it may be desirable for a UE 102 to select a base station or radio cell (operated by a RAN 113, 1103) which supports a PEE 119 (also referred to as "PEE aware base station" or "PEE aware cell"). For example, omni-directional transmission by the RAN may be suboptimal by means of interference and transmission power management and therefore directed signal transmission using a PEE 119 may be desirable. It should be noted that when an example with respect to base station selection is given herein this may also include selection of a radio cell (so in case the base station operates multiple (radio) cells this may also include a cell selection). Vice versa, when an example with cell selection is described the example is also applicable to base station selection (e.g. followed by a cell selection in case the base station operates multiple cells).

So, according to various embodiments, an approach (i.e. method and/or mechanism) is provided which enables cell selection based on Propagation Environment Elements (PEEs). For this, according to various embodiments, signalling enhancements are provided in the sense that during connection establishment a SIB message for propagation environment assistance information is introduced (e.g. in a way like SIB19 for carrying satellite assistance information). Further, according to various embodiments, attributes related to PEE usage are introduced during RRC connection establishment and RRC reconfiguration.

According to various embodiments, a UE 102 (in general a mobile terminal but the term UE is used in the following) selects (e.g. implements a method to select) a base station (e.g. gNB) based on PEE information (also referred to as "PEE support information", i.e. information about PEEs associated to various base stations and/or cells, in particular for example PEE identifications) and one or more PEE selection criteria (e.g. with regard to desired capabilities of a PEE). The UE is enabled to be aware of the PEEs per base station (i.e. associated to the various base stations, e.g. per cell) and facilitates connection establishment in a PEE aware manner. The UE 102 is thus enabled to select not only the "best" gNB, but the "best" gNB-PEE(s) combination.

Further, according to various embodiments, UE sessions (e.g. a PDU (Protocol Data Unit) session) are enabled to use specific PEEs in a cell. So, for example, a UE 102 may request a specific PEE for a certain PDU session or the RAN may select a specific PEE for a certain PDU session. The RAN 102, 113 includes an entity (or component) which is responsible to provide the UE 102 with PEE information (i.e. e.g. identifications of supported PEEs per base station and/or cell), i.e. to advertise one or more PEEs 119 to the UE 102. This (or another) entity may first identify the one or more PEEs 119 in the 4G and/or 5G communication system. For this, a PEE 119 is registered in the 4G and/or 5G communication system the communication system and the UEs can use it.

In the following examples, the 5G communication system (5GS) is used as example for a PLMN (Public Land Mobile Network) and it is assumed that the 5GS is aware of PEEs 119 (available to be used by its RAN 103), a PEE-ID (identification) is used to identify a physical PEE 119, PEE are uniquely identified within a PLMN, a PEE 119 can be used to support connectivity in multiple (radio) cells operated by base stations of the RAN 103, a PEE 119 can be associated to one or more Tracking Areas, a PEE 119 can be used by multiple network slices (wherein e.g. together with a Selected NSSAI (Network Slice Selection Assistance Information) a PEE identifier forms a unique identifier) and a PEE can be used by multiple RANs (e.g., 4G and/or 5G).

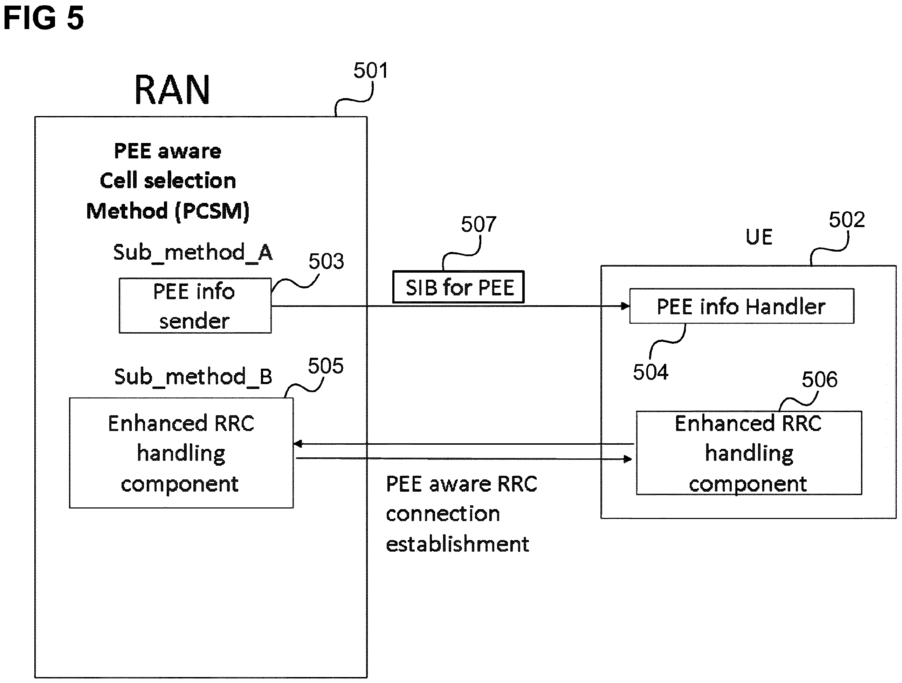

Figure 5 illustrates a cell selection according to an embodiment.

A RAN 501, e.g. corresponding to RAN 103, and a UE 502, e.g. corresponding to UE 102, are involved in the flow.

The RAN 501 implements a PEE aware cell selection method (PCSM). For example, the PEF 121 implements the PCSM and the PEF 121 is implemented by the RAN 103. Alternatively, the PEF 121 may be implemented elsewhere, e.g. in the 5G core 101.

The PCSM can be seen to include two sub-methods (or functions). The first function is the provision of PEE information to the UE 502, here implemented by a PEE information sender 503. It sends PEE information (about PEEs supported by various cells of the RAN 501) to the UE 502 in the form of a system information block (SIB) for PEE information 507, in the following referred to as "PEE-SIB".

The UE 502 implements a PEE information handler 504 which processes the PEE information provided by the RAN 501.

The RAN 501 further comprises a (RAN-side) enhanced RRC (Radio Resource Control) handling component 505 which performs (as second function of the PCSM) PEE aware RRC connection establishment with a (UE-side) enhanced RRC handling component 506 of the UE 502.

The UE side enhanced RRC handling component 506 takes into account the PEE information it has received in the PEE-SIB. In particular, it selects a base station according to its PEE association support that it wants to use for communication with the RAN 501 (or does select a base station which does not support a PEE if PEE usage is not intended). For example, UE side enhanced RRC handling component 506 decides whether to use beamforming and transmission and/or reception via a PEE and if this is the case, it selects a base station supporting a suitable PEE.

RAN management systems/PEE management systems or other means like OSSBSS may provide information to the RAN 501 based on which the RAN 501 determines the PEE information (e.g., PEE location and/or PEE capabilities and/or the association between the RAN elements and the PEEs). Then this information is used to facilitate PEE aware RRC connection establishment with the UE 502.

Besides the PEE-SIB messaging other means can be also used to enable awareness of the PEEs, PEEs capabilities and/or PEs configuration to the UE. For example a UE can auto-discover the PEE or directly interact with other control and management entities.

This information provided to the RAN 501 for example includes
- Cell IDs
- Tracking Area IDs
- RAN location information
- RAN type information (e.g., 3GPP and Non-3GPP)
- NCGI (New Radio Cell Global Identity)
- PEE-IDs
- PEE type information (e.g. PMU or NCR or also which type, e.g. model of PMU or NCR, antenna type, antenna element type etc.)
- PEE location information
- PEE dimensions
- PEE capability information
and possibly additional information.

During connection establishment between RAN 501 and UE 502 a SIB is introduced carrying PEE (e.g. passive or active metasurface) information (or "PEE assistance information" or "PEE support information").

When interacting with a gNB of the RAN 501 (e.g. after being switched on or entering its coverage area or periodically) the UE 501 decodes the Master Information Block (MIB) and System Information Blocks (SIBs) to obtain essential information for the RAN like information about the cell, such as cell identity, system bandwidth, and cell-specific configuration. SIB messages are broadcast by 5G base stations (i.e., gNB - gNodeB) and contain information that UEs 502 need to connect to and operate within the 5G network. For example:
- SIB#2 contains cell re-selection information common for intra-frequency, inter-frequency and/or inter-RAT cell re-selection as well as intra-frequency cell re-selection information other than neighbouring cell related
- SIB#3 contains neighbouring cell related information.

As mentioned above, according to various embodiments, a "PEE-SIB" is introduced which carries PEE information. This information is propagated by the gNB along with the other SIBs. For example, each gNB advertises only the PEEs (i.e. only sends information about those PEEs) which it is authorized (i.e. allowed) to use (i.e. its "associated" PEEs). The association between the RAN elements and the PEEs can be decided by the RAN management systems, the PEE management systems or other means like OSSBSSt.

It should be noted that system information, including the PEE-SIB can also be sent upon request by the UE 502. So, the PEE-SIB may be periodically broadcasted or transmitted on demand by the RAN 501.

It should be noted that instead of introducing an additional SIB (i.e. using a dedicated SIB for PEE information), an existing SIB may also be updated (e.g. extended ) with PEE information. Such an updated SIB is nevertheless referred to as PEE-SIB in the following.

SIBs typically use ASN.1 (Abstract Syntax Notation One) language.

In the following, an example for a PEE-SIB is given.

```
 PEInfoModule DEFINITIONS ::= BEGIN
 -- Define types for elements and attributes
 ID ::= VisibleString
 X ::= VisibleString
 Y ::= VisibleString
 Z ::= VisibleString
 Type ::= VisibleString
 WorkingFreq ::= INTEGER (1..MAX)
 WorkingVoltage ::= REAL
 -- Define complex types for elements with sequences
 PEEList ::= SEQUENCE OF ID
 PEENeigh ::= SEQUENCE {
  neighId1 ID,
  neighId2 ID
 }
 PEELocation ::= SEQUENCE {
  peeld ID,
  x X,
  Y Y,
  z Z
 }
 PEECapability ::= SEQUENCE {
  type Type,
  workingFreq WorkingFreq,
  workingVoltage WorkingVoltage,
  risSize CHOICE {
     risAntennaElementPattern VisibleString,
     risAntennaElements VisibleString
   }
 }
 -- Define the main PE-info type with sequence
 PEInfo ::= SEQUENCE {
  peeList PEEList,
  peeNeighList SEQUENCE OF PEENeigh,
  peeLocationList SEQUENCE OF PEELocation,
  peeCapabilityList SEQUENCE OF PEECapability
 }
 END
```

- In 5G, the Radio Resource Control (RRC) process is responsible for managing the radio resources and establishing and maintaining the radio connection between the User Equipment (UE) and the 5G New Radio (NR) network. The RRC process involves several key procedures related to connection establishment, network configuration, radio bearer setup, transition between active and inactive states, handover and mobility procedures.

Overall, the RRC process plays a crucial role in managing the radio resources efficiently, optimizing network performance, and providing a seamless user experience in 5G networks.

Relevant 3GPP (Third Generation Partnership Project) specifications with regard to the enhanced RRC signalling (performed by the enhanced RRC handling components 505, 506) include

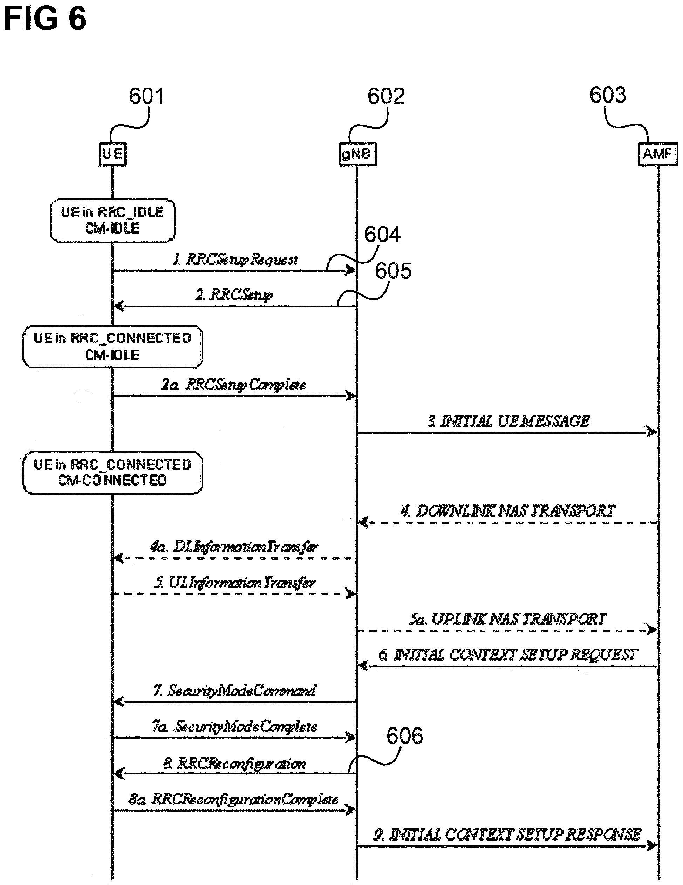

Figure 6 shows the message flow between UE 601, gNB 602 and AMF 603 according to 3GPP for example for UE transition from RRC_IDLE to RRC_CONNECTED.

This includes in particular a RRCSetupRequest message 604 from the UE 601 to the gNB 602 and a RRC Setup message 605 from the gNB 602 to the UE 601 followed by (after some gNB-AMF communication) a RRCConfiguration message 606 from the gNB 602 to the UE 601.

According to the enhanced RRC connection procedure, every RAN element (e.g., gNB, DU or CU) knows the surrounding associated PEEs like PMUs or NCRs.

A first option is that (as part of the enhanced RRC connection procedure) in the RRCSetupRequest message 605 (i.e. connection request by the UE 601), the UE selects the RAN element (i.e. gNB) but also PEEs. UE is aware of the corresponding PEEs from the PEE-SIB message sent by this RAN element (i.e. gNB).

A second option is that (as part of the enhanced RRC connection procedure) the UE 602 selects a gNB but not the PEEs used for the communication with the gNB. Instead, the RAN Control Plane selects the PEE(s) to be used and informs the UE in the RRCSetup message, i.e. the PEE element(s) used for the communication are indicated to the UE 602 in the RRCSetup message 605.

In the following, an example for the RRCSetupRequest message 605 is given for the first option, i.e. the UE selects the RAN element (i.e. gNB) but also the PEEs learnt by the SIB message broadcasted by this RAN element (i.e. gNB).
RRCSetupRequest message:
   Transaction ID: <Unique identifier for the transaction>
   UE Identity: <UE's identity information, IMSI or SUCI >
   Radio Access Type: <5G NR radio access type>
   Requested PLMN: <PLMN (Public Land Mobile Network)information>
   Security Config: <Security configuration parameters>
   ... <Other relevant parameters>
UE Capability Information:
   - Supported Bands:
      - n78 (3.3 GHz - 3.8 GHz)
      - n41 (2.3 GHz - 2.7 GHz)
      - n1 (2.1 GHz - 2.2 GHz)
   - Supported Features:
      - MIMO (Multiple Input Multiple Output)
      - Beamforming
      - Carrier Aggregation
Requested Services:
   - Data
   - Voice (if applicable)
   - SMS (if applicable)
Other Information:
   - Initial Paging Occasion: Slot 2
   - Measurement Report Periodicity: 40 ms
   - Mobility Information: If the UE is moving and needs handover.
   - Power Control: If there are specific power control parameters
   - Selected PEEs
      - PEE identity
      - PEE characteristics
      - PEE configuration

In the following, an example for the RRCSetup message 605 is given for the second option, i.e. in the RRC response to the connection request the PEE(s) to be used are also included. It should be noted that downlink and uplink may be handled differently (i.e. different PEEs can be used by the communication between gNB 602 and UE 601 for the uplink than for the downlink).
RRCSetup message:
Header:
- RRC Message Type: RRCSetup
- Transaction ID: Unique identifier for the transaction Parameters:
   - Cell Selection Info: Information about the cell selected by the UE
      - Cell Identity: Identity of the serving cell
      - Physical Cell Identity: Physical layer identifier of the cell
      - Cell Specific Config: Configuration parameters specific to the cell
   - Radio Bearer Config: Configuration parameters for radio bearers
      - RLC/MAC/PDCP Config: Configuration of Radio Link Control (RLC)
   - Mobility Control Info: Information related to mobility control
      - Measurement/Handover/etc. Config
   - Security Config: Configuration parameters for security
   - UE Capability Info: Information about UE capabilities
      - Supported Bands/Features/Services
   - System Information: Information about the system and network
      - SIB1: Contents of System Information Block 1
      - SIB2: Contents of System Information Block 2
      - SIB3, SIB4,new-PEE-SIB ... : Contents of other System Information Blocks as needed
   - Additional Information Elements: Other relevant information elements a
      - UE specific parameters
      - Network-specific Parameters:
         - Selected PEEs
            - PEE identity
            - PEE characteristics
            - PEE configuration

For a UE 601 in RRC_CONNECTED state, the network side (i.e. gNB 602 in the present example) can provide system information through dedicated signalling using the RRCReconfiguration message 606. Updated PEE information can be included in the RRCReconfiguration message 606. The content and structure of the RRCReconfiguration message 602 may for example be similar to the RRCSetup message as given above.

For a transition from RRC_INACTIVE to RRC_CONNECTED similar messages and procedures may be used. In that case, for example, a RRCResumeRequest message is used instead takes the place of the RRCSetup message 605 and a RRCResume message is used instead takes the place of the RRCSetup message 605.

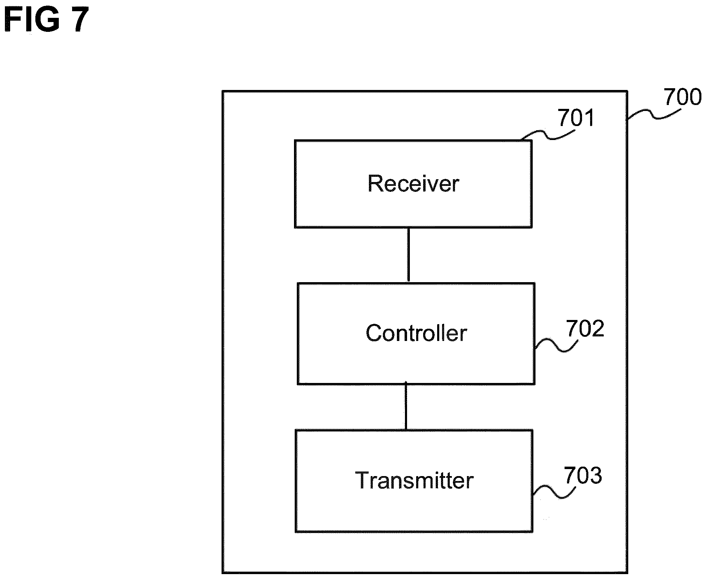

In summary, according to various embodiments, a mobile terminal is provided as illustrated in figure 7.

Figure 7 shows a mobile terminal 700 according to an embodiment.

The mobile terminal 700 comprises a receiver 701 configured to receive one or more messages (e.g. from a radio access network) comprising propagation environment element information specifying, for at least one base station of a plurality of base stations of a (e.g. the) radio access network, one or more propagation environment elements which are allowed to be used for communication between the mobile terminal and the selected base station (i.e. allowed to interact with for communication, i.e. transmit data to and/or receive data from the mobile terminal, e.g. via beams, i.e. transmit beams to and/or receive beams from the mobile terminal), e.g. that the at least one base station is allowed (e.g. supports) to use for communication with the mobile terminal.

The mobile terminal 700 further comprises a controller 702 configured to select one of the base stations depending on (i.e. taking into account) the propagation environment element information. For example, this may include that the controller 702 checks one or more criteria and selects the base stations which (e.g. best) fulfils the one or more criteria. This may relate to capabilities of the PEE(s) which the base station is allowed to use (or any other parameters of the PEE such as dimension, type etc.). For example, the controller 702 determines a base station which is allowed to transmit/receive to/from a propagation environment element which enables a desired (e.g. pre-determined) communication capability (such as beamforming, phase manipulation etc.) and selects that base station.

Further, the mobile terminal 700 comprises a transmitter 703 configured to transmit a connection request to the selected base station.

According to various embodiments, in other words, a mobile terminal is informed per base station about one or more available PEEs (if any) associated to the base station (i.e. available for the base station for communication with the mobile terminal) and selects a base station taking account this information (e.g. selects specifically a base station having an available PEE if the mobile terminal intends to communicate with the RAN using a PEE). Further, there may be a RAN controlling component (implemented by the mobile terminal or the RAN) configured to determine which PEEs are used by a UE for communication with the RAN.

The approach of figure 7 enables advanced mechanisms and new interactions to jointly optimize RAN and PEE operations, like also end-to-end communication with the UEs. The enhanced RRC connection process with new methods/mechanisms can enable the use of PEEs as a telecom resource and raise awareness to the UE of the existence or PEE within the RAN deployment by exchanging information about PEEs. Advanced control actions can be enabled related to both the mobile network operations and PEEs operation by means information exchange between the RAN and the UE about the existence and use of PEEs. The approach of figure 7 is not restrictive to one orchestration framework and can be applied to designs like in O-RAN based solutions. It enables flexibility of the way metasurfaces and Network Control Repeaters usage can be optimized by considering RAN operations. It can be operated over multi-technology PEEs and can cover both the indoor and outdoor deployment scenarios.

Regarding the approach of figure 7 the necessary functionality and interfaces may be introduced to manage the identification of advanced network services in the light of dynamic association between PEEs and the RAN.

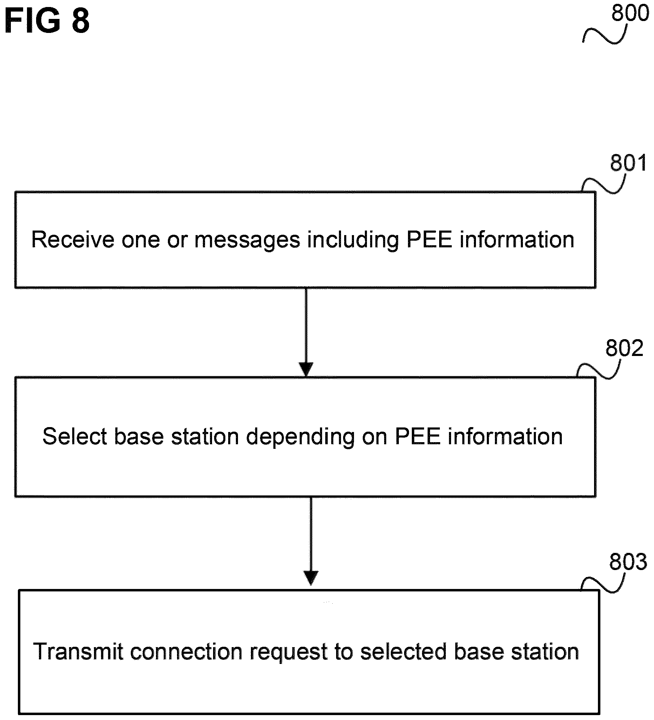

The mobile terminal 700 for example carries out a method as illustrated in figure 8.

Figure 8 shows a flow diagram 800 illustrating a method for connecting to a communication network.

In 801, one or more messages are received comprising propagation environment element information specifying, for at least one base station of a plurality of base stations of a radio access network, one or more propagation environment elements which are allowed to be used for communication between the mobile terminal and the selected base station.

In 802, one of the base stations is selected depending on the propagation environment element information.

In 803, the mobile terminal transmits a connection request to the selected base station.

The components of the mobile terminal (e.g. the receiver, the controller and the transmitter and similar components of the radio access network, in particular the base stations) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A mobile terminal, comprising:
A receiver configured to receive one or more messages comprising propagation environment element information specifying, for at least one base station of a plurality of base stations of a radio access network, one or more propagation environment elements which are allowed to be used for communication between the mobile terminal and the selected base station;
A controller configured to select one of the base stations depending on the propagation environment element information; and
A transmitter configured to transmit a connection request to the selected base station.

2. The mobile terminal of claim 1, wherein the controller is configured to select one or more propagation environment elements of a set of propagation environment elements which are allowed to be used for communication between the mobile terminal and the selected base station and the transmitter is configured to include into the connection request an indication of the selected one or more propagation environment elements.

3. The mobile terminal of claim 1, wherein the receiver is configured to receive a response to the connection request indicating one or more of the propagation environment elements which are to be used for communication between the mobile terminal and the selected base station and the mobile terminal is configured to use the one or more indicated propagation environment elements for communication with the selected base station.

4. The mobile terminal of claim 3, wherein the response is a radio resource control setup message or a radio resource control resume message.

5. The mobile terminal of claim 1, wherein the receiver is configured to receive a radio resource control reconfiguration message indicating one or more of the propagation environment elements which are to be used for communication between the mobile terminal and the selected base station and the mobile terminal is configured to use the one or more indicated propagation environment elements for communication with the selected base station.

6. The mobile terminal of any one of claims 1 to 4, wherein the connection request is a radio resource control setup request message or a radio resource control resume request message.

7. The mobile terminal of any one of claims 1 to 6, wherein the receiver is configured to receive, from each base station of the plurality of base stations, a respective message comprising respective propagation environment element information specifying one or more propagation environment elements which can be used for communication between the mobile terminal and the selected base station or specifying that there is no propagation environment element which can be used for communication between the mobile terminal and the selected base station.

8. The mobile terminal of any one of claims 1 to 7, wherein the one or more messages indicate a location, a type, an identification, dimensions and/or capabilities and/or configuration of the one or more propagation environment elements which are allowed to be used for communication between the mobile terminal and the selected base station.

9. The mobile terminal of any one of claims 1 to 8, wherein the connection request is a radio resource control request.

10. The mobile terminal of any one of claims 1 to 9, wherein the one or more messages are system information blocks.

11. The mobile terminal of any one of claims 1 to 10, wherein the one or more messages are dedicated system information blocks for providing propagation environment element to mobile terminals.

12. The radio communication component according to any one of claims 1 to 11, wherein the one or more propagation environment elements include one or more network-controlled repeaters and/or one or more passive and/or active programmable metasurface units.

13. A communication system comprising the mobile terminal of any one of claim 1 to 12 and further comprising the plurality of base stations, wherein the at least one base station comprises a transmitter configured to transmit one of the one or more messages which comprises the propagation environment element information.

14. The communication system of claim 13, wherein each of the plurality of base stations is configured to transmit a respective one of the one or more messages comprising respective propagation environment element information specifying one or more propagation environment elements which are allowed to be used for communication between the mobile terminal and the selected base station or specifying that there is no propagation environment element which is allowed to be used for communication between the mobile terminal and the selected base station.

15. A method for connecting to a communication network, comprising:
receiving one or more messages comprising propagation environment element information specifying, for at least one base station of a plurality of base stations of a radio access network, one or more propagation environment elements which are allowed to be used for communication between the mobile terminal and the selected base station;
selecting one of the base stations depending on the propagation environment element information; and
transmitting a connection request to the selected base station.

## Amended claims

### Amended claims in accordance with Rule 137(2) EPC.

1. A mobile terminal (102, 203, 305, 405, 502, 601, 700), comprising:
A receiver (701) configured to receive one or more messages comprising propagation environment element information specifying, for at least one base station of a plurality of base stations (201, 202) of a radio access network, one or
more propagation environment elements (119, 204, 205), which are allowed to be used for communication between the mobile terminal (102, 203, 305, 405, 502, 601, 700) and the selected base station;
A controller (702) configured to select one of the base stations (201, 202) depending on the propagation environment element information; and
A transmitter (703) configured to transmit a connection request to the selected base station,
**characterized in that** the one or more propagation environment elements (119, 204, 205) are objects which affect the propagation of radio waves.

2. The mobile terminal (102, 203, 305, 405, 502, 601, 700) of claim 1, wherein the controller (702) is configured to select one or more propagation environment elements (119, 204, 205) of a set of propagation environment elements which are allowed to be used for communication between the mobile terminal (102, 203, 305, 405, 502, 601, 700) and the selected base station and the transmitter (703) is configured to include into the connection request an indication of the selected one or more propagation environment elements (119, 204, 205).

3. The mobile terminal (102, 203, 305, 405, 502, 601, 700) of claim 1, wherein the receiver (701) is configured to receive a response to the connection request indicating one or more of the propagation environment elements (119, 204, 205) which are to be used for communication between the mobile terminal (102, 203, 305, 405, 502, 601, 700) and the selected base station and the mobile terminal (102, 203, 305, 405, 502, 601, 700) is configured to use the one or more indicated propagation environment elements (119, 204, 205) for communication with the selected base station.

4. The mobile terminal (102, 203, 305, 405, 502, 601, 700) of claim 3, wherein the response is a radio resource control setup message or a radio resource control resume message.

5. The mobile terminal (102, 203, 305, 405, 502, 601, 700) of claim 1, wherein the receiver (701) is configured to receive a radio resource control reconfiguration message indicating one or more of the propagation environment elements (119, 204, 205) which are to be used for communication between the mobile terminal (102, 203, 305, 405, 502, 601, 700) and the selected base station and the mobile terminal (102, 203, 305, 405, 502, 601, 700) is configured to use the one or more indicated propagation environment elements (119, 204, 205) for communication with the selected base station.

6. The mobile terminal (102, 203, 305, 405, 502, 601, 700) of any one of claims 1 to 4, wherein the connection request is a radio resource control setup request message or a radio resource control resume request message.

7. The mobile terminal (102, 203, 305, 405, 502, 601, 700) of any one of claims 1 to 6, wherein the receiver (701) is configured to receive, from each base station of the plurality of base stations (201, 202), a respective message comprising respective propagation environment element information specifying one or more propagation environment elements (119, 204, 205) which can be used for communication between the mobile terminal (102, 203, 305, 405, 502, 601, 700) and the selected base station or specifying that there is no propagation environment element which can be used for communication between the mobile terminal (102, 203, 305, 405, 502, 601, 700) and the selected base station.

8. The mobile terminal (102, 203, 305, 405, 502, 601, 700) of any one of claims 1 to 7, wherein the one or more messages indicate a location, a type, an identification, dimensions and/or capabilities and/or configuration of the one or more propagation environment elements (119, 204, 205) which are allowed to be used for communication between the mobile terminal (102, 203, 305, 405, 502, 601, 700) and the selected base station.

9. The mobile terminal (102, 203, 305, 405, 502, 601, 700) of any one of claims 1 to 8, wherein the connection request is a radio resource control request.

10. The mobile terminal (102, 203, 305, 405, 502, 601, 700) of any one of claims 1 to 9, wherein the one or more messages are system information blocks (507).

11. The mobile terminal (102, 203, 305, 405, 502, 601, 700) of any one of claims 1 to 10, wherein the one or more messages are dedicated system information blocks (507) for providing propagation environment element information to mobile terminals.

12. The mobile terminal (102, 203, 305, 405, 502, 601, 700) according to any one of claims 1 to 11, wherein the one or more propagation environment elements (119, 204, 205) include one or more network-controlled repeaters and/or one or more passive and/or active programmable metasurface units.

13. A communication system comprising the mobile terminal (102, 203, 305, 405, 502, 601, 700) of any one of claim 1 to 12 and further comprising the plurality of base stations (201, 202), wherein the at least one base station comprises a transmitter (703) configured to transmit one of the one or more messages which comprises the propagation environment element information.

14. The communication system of claim 13, wherein each of the plurality of base stations (201, 202) is configured to transmit a respective one of the one or more messages comprising respective propagation environment element information specifying one or more propagation environment elements (119, 204, 205) which are allowed to be used for communication between the mobile terminal (102, 203, 305, 405, 502, 601, 700) and the selected base station or specifying that there is no propagation environment element which is allowed to be used for communication between the mobile terminal (102, 203, 305, 405, 502, 601, 700) and the selected base station.

15. A method for connecting to a communication network, comprising:
receiving (801) one or more messages comprising propagation environment element information specifying, for at least one base station of a plurality of base stations (201, 202) of a radio access network, one or more propagation environment elements (119, 204, 205) which are allowed to be used for communication between the mobile terminal (102, 203, 305, 405, 502, 601, 700) and the selected base station;
selecting (802) one of the base stations (201, 202) depending on the propagation environment element information; and
transmitting (803) a connection request to the selected base station,
**characterized in that** the one or more propagation environment elements (119, 204, 205) are objects which affect the propagation of radio waves.
